# EUROPÄISCHE PATENTSCHRIFT

(11) **EP 1 510 745 B1**
(45) Veröffentlichungstag und Bekanntmachung des Hinweises auf die Patenterteilung: **03.11.2010**
(21) Anmeldenummer: 03019438.5
(22) Anmeldetag: 28.08.2003
(51) Int. Cl.: F16L 39/06

(54) **Mehrfach-Drehdurchführung**
Multiple rotatable connection
Passage rotatif multiple

(43) Veröffentlichungstag der Anmeldung: 02.03.2005
(73) Patentinhaber: Gesellschaft für technische Entwicklungen mbH, 28832 Achim (DE)
(72) Erfinder: Zimmer, Adalbert, 28832 Achim (DE)
(74) Vertreter: Biehl, Christian

(56) Entgegenhaltungen:
- EP-A- 1 123 784
- US-A- 4 126 336
- US-A- 4 683 912
- US-A- 4 756 559
- US-A- 5 797 413

## Beschreibung

Die Erfindung betrifft eine Mehrfach-Drehdurchführung zum Übertragen von Fluiden, mit den Merkmalen des Oberbegriffs des Anspruchs 1.

Eine derartige Drehdurchführung zum Übertragen von Flüssigkeiten oder Gasen zwischen einem ortsfest gelagerten Bauteil und einem rotierend gelagerten Bauteil ist aus der EP 1 123 784 bekannt.

Diese Drehdurchführung ist bereits modular ausgebildet, die jeweiligen Module sind jedoch ungleichartig ausgebildet, was einen Ersatz eines defekten Moduls - etwa wegen Versagens einer Dichtung - erschwert.

Aus der US 4 683 912 ist eine Drehdurchführung bekannt, in der die achsparallelen Bohrungen mit Steckröhrchen unterschiedlicher Länge ausgekleidet sind.

Der Erfindung liegt die Aufgabe zugrunde, eine kostengünstig herzustellende Drehdurchführung zu schaffen, die den jeweiligen Anforderungen entsprechend zusammengestellt werden kann und bei der eine defektes Drehdurchführung einfach austauschbar ist.

Erfindungsgemäß wird diese Aufgabe durch die im Anspruch 1 angegebenen Merkmale gelöst, die Unteransprüche geben bevorzugte Ausgestaltungen der Erfindung an.

Der hier vorgeschlagene Aufbau erlaubt es, dass der Verwender eine Mehrzahl von Einheiten vorhält und diese den jeweilige Erfordernissen entsprechend zusammen zu einer Vorrichtung zusammensetzt. Dabei wird er die erforderliche Anzahl von Steckröhrchen in die Bohrungen in dem Kopfstück einsetzen und nach Auffädeln einer Einheit auf den Dom diese in die Bohrungen in der Einheit einführen. Auf der freiliegenden Seite der Einheit wird er eine um eins geringere Anzahl von Steckhülsen einstecken, die nachfolgende Einheit auffädeln usw. Auf diese Weise wird eine Mehrzahl von Kanälen gebildet, die jeweils einen der ersten Anschlüsse in einer der Einheiten mit einer der zweiten Anschlüsse in dem Kopfstück miteinander verbindet.

Die Erfindung wird im folgenden anhand einer Zeichnung erläutert. Dabei zeigt:

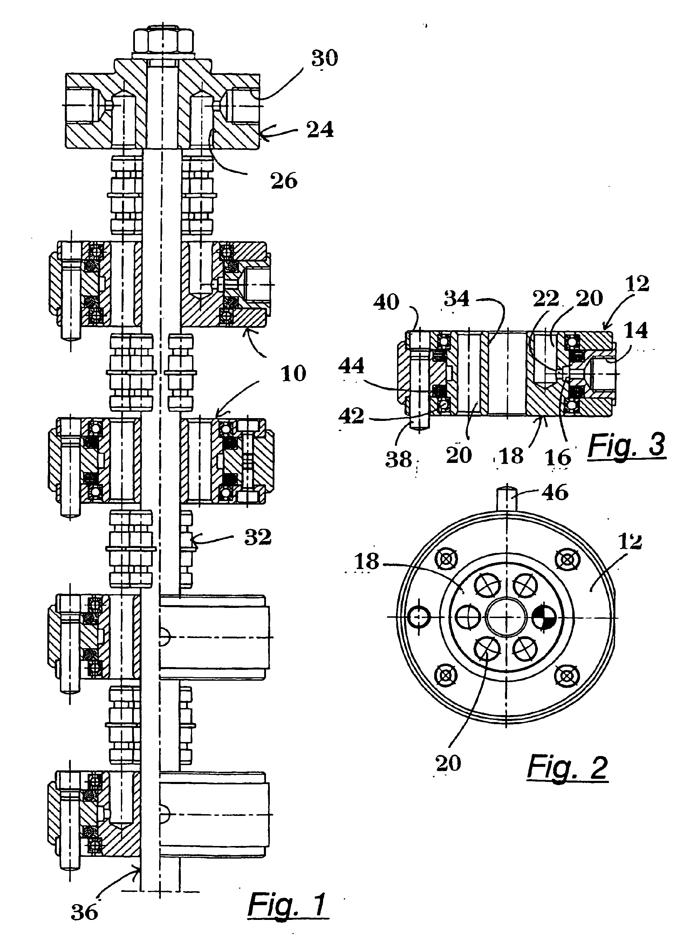

- Fig. 1: die Drehdurchführung in nicht zusammengestecktem Zustand mit einer Mehrzahl von Einheiten, überwiegend im Schnitt,
- Fig. 2: eine Draufsicht auf eine der Einheiten,
- Fig. 3: eine der Einheiten in einem Schnitt,

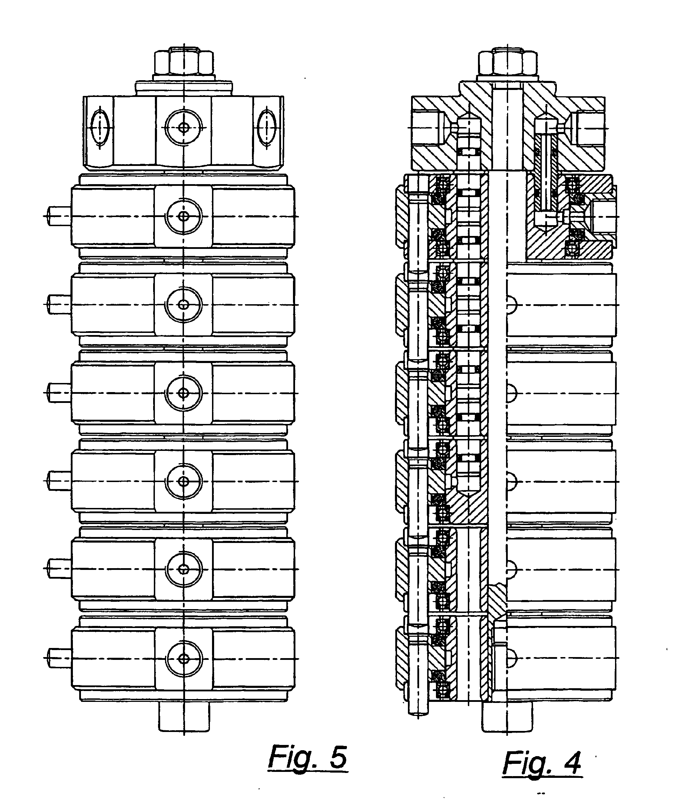

- Fig. 4: die gesamte Vorrichtung in gestecktem Zustand, teilweise im Schnitt, und
- Fig. 5: die gesamte Vorrichtung in einer Seitenansicht.

Die Mehrfach-Drehdurchführung zum Übertragen mehrerer Fluide besteht aus einer Mehrzahl von gesonderten, miteinander drehsicher zu verbindenden Einheiten 10. Die Einheiten 10 bestehen jeweils aus einem ringförmigen ersten Element 12, das mit einem ersten seitlich abgehenden Anschluss 14 versehen ist, sowie einem scheibenförmigen zweiten Element 18, das mit einer Mehrzahl von achsenparallelen Bohrungen 20 versehen ist. Das zweite, scheibenförmige Element 18 ist dabei innerhalb des ersten, ringförmigen Elements 12 über Kugellager 42 oder dergleichen drehbar gelagert.

Das zweite, scheibenförmige Element 18 ist mit mehreren (in der Zeichnung sechs) achsparallelen Bohrungen 20 versehen, von denen eine einseitig verschlossen ist und mit einer seitlich abgehenden Stichbohrung 22 versehen ist. Eines der Elemente 12, 18 (in der Zeichnung das zweite Element 18) ist mit einer umlaufenden Ringleitung 16 versehen, die einerseits mit dem ersten Anschluss 14 und andererseits mit der Stichbohrung 22 kommuniziert. Das erste Element 12 nimmt Dichtungen 44 auf, die gegenüber dem zweiten Element 18 dichten.

Die Mehrfach-Drehdurchführung weist weiter ein Kopfstück 24 auf, das mit einer Mehrzahl von Bohrungen 26 versehen ist, die mit der Mehrzahl von Bohrungen 20 des zweiten Elements 18 fluchten.

Weiter ist eine Mehrzahl von Steckröhrchen 32 vorgesehen, die in die Bohrungen 20, 26 benachbart angeordneter Einheiten 10 bzw. dem Kopfstück 24 eingesteckt werden und diese miteinander so verbinden, dass in der Mehrfach-Durchführung ein dichter, durchgehender Kanal gebildet wird. Die Steckröhrchen 32 haben weiter die Funktion der Drehsicherung zwischen benachbarten Elementen 10 und dem Kopfstück 24.

Die Einheiten 10 und das Kopfstück 24 sind weiter mit einer Ausnehmung 34 versehen, die zum Aufreihen der Einheiten 10 auf einen Dom 36 dienen. Dieser Dom 36 kann der jeweils erforderlichen Anzahl von Einheiten 10 entsprechende Länge haben.

Das erste Element 12 jeder Einheit ist mit einem Stift 38 sowie mit einer zur Aufnahme des Stifts 38 einer benachbarten Einheit 10 dienenden Bohrung 40 versehen. Durch das Zusammenwirken von Stift 38 und Bohrung 40 sind die ersten Elemente 12 jeder Einheit 10 miteinander gegen ein Verdrehen gesichert verbunden. Ein weiterer Stift 46 an dem äußeren Element 12 dient zur verdrehsicheren Befestigen eines der zweiten Elemente an dem zugehörigen Bauteil (regelmäßig dem ortsfesten).

Der modulare Aufbau erlaubt es, eine Mehrfach-Durchführung mit der jeweils erforderlichen Anzahl von Einheiten zu bilden, wobei der Dom auf die jeweils erforderliche Länge gekürzt werden kann (der Dorn kann natürlich auch aus mit Gewindeabschnitten versehenen Stücken gebildet sein, wobei die Anzahl der zusammen geschraubten Stücke der Anzahl der Einheiten 10 entsprechend gewählt wird). Es ist weiter möglich, bei Ausfall einer Einheit 10 diese auszuwechseln, ohne dass die gesamte Mehrfach-Drehführung ausgewechselt werden muss.

## Patentansprüche

1. Mehrfach-Drehdurchführung zum Übertragen mehrerer Fluide zwischen einem ortsfest gelagertem Bauteil und einem rotierend gelagerten Bauteil, mit
- einem ortsfest gelagerten Element und einem rotierend gelagerten Element, die jeweils mit einer Mehrzahl von ersten bzw. zweiten miteinander kommunizierenden Anschlüssen versehen sind,
- einer Mehrzahl von gesonderten, miteinander verdrehsicher in einer den jeweiligen Erfordernissen entsprechenden Zahl zu verbindenden Einheiten (10),
wobei die Einheiten (10) jeweils aus einem ringförmigen ersten Element (12) und einem innerhalb des ringförmigen Elements (12) relativ zu diesem drehbar gelagerten, scheibenförmigen zweiten Element (18) bestehen,
wobei die Einheiten (10) mit einer Ausnehmung (34) versehen sind, die zum Aufreihen der Einheiten (10) auf einen entsprechend der Anzahl der Einheiten (10) auf eine erforderliche Länge abgelängten Dom (36) dienen,
- - wobei das erste Element (12) mit einem ersten seitlich abgehenden Anschluss (14) versehen ist, und mit einem nach außen weisenden Stift (46) zur verdrehsicheren Befestigung an einem zugehörigen Bauteil versehen ist, und
- - wobei das zweite Element (18) mit einer Mehrzahl von achsenparallelen Bohrungen (20) versehen ist, wobei von den achsenparallelen Bohrungen (20) eine einseitig verschlossen ist und mit einer Stichbohrung (22) versehen ist,
wobei eines der Elemente (12, 18) mit einer mit dem ersten Anschluss (14) und mit der Stichbohrung (22) kommunizierenden Ringleitung (16) versehen ist, sowie mit
einem Kopfstück (24) mit einer Mehrzahl von mit den Bohrungen (20) des zweiten Elements (18) fluchtenden Bohrungen (26), die jeweils über Stichbohrungen (28) mit einem der zweiten Anschlüsse (30) kommunizieren, und
einer Mehrzahl von in die Bohrungen (20, 26) benachbart angeordneter Einheiten (10) bzw. dem Kopfstück (24) eingesteckten Steckröhrchen (32), die in der mit modularem gleichartigen Aufbau gebildeten Mehrfach-Durchführung eine Drehsicherung zwischen benachbarten Elementen (10) und dem Kopfstück bilden und, dass in der Mehrfach-Drehdurchführung so ein dichter durchgehender Kanal ausgebildet wird.

2. Mehrfach-Drehdurchführung nach Anspruch 1, **dadurch gekennzeichnet, dass** das erste Element (12) mit einem Stift (38) und einer zur Aufnahme des Stifts (38) einer benachbarten Einheit (10) dienenden Bohrung (40) versehen ist.

3. Mehrfach-Drehdurchführung nach einem der vorangehenden Ansprüche, **dadurch gekennzeichnet, dass** der zum Aufreihen der Einheiten (10) entsprechend der Anzahl der Einheiten (10) dienende Dorn (36) aus einer Anzahl zusammengeschraubter Gewindeabschnitte besteht, um eine Einheit (10) auswechseln zu können, ohne die gesamte Mehrfach-Drehdurchführung auszuwechseln.

## Claims

1. A multiple rotary transmission leadthrough for the transmission of several fluids between a stationary component and a rotating component, with
- a stationary component and a rotating component that are each provided with a plurality of first and/or second connections communicating with each other,
- a plurality of separate units (10), the number corresponding to the respective requirements, to be connected with each other so as to be protected against rotation,
the units (10) comprising in each case of an annular first element (12) and a disc-form second element (18) fitted inside the ring-form element (12) and rotatable in relation to it,
the units (10) being provided with a recess (34) that serve to line up the units (10) on a mandrel (36) that has been cut to size to a required length according to the number of units (10),
- the first element (12) being provided with a first side branching connection (14) and a pin (46) pointing outwards for fastening to an associated component so as to be protected against rotation, and
- the second element (18) being provided with a number of axially parallel holes (20), of which one is closed on one side and provided with a branch hole (22),
one of the elements (12, 18) being provided with a ring conduit (16) communicating with the first connection (14) and the branch hole (16), and with
a head piece (24) with a number of holes (26) that are flush with the holes (20) of the second element (18) and that in each case communicate via branch holes (28) with one of the second connections (30), and
a number of units (10) arranged of plug-in tubelets (32) that are plugged into the holes (20, 26) of units (10) arranged next to each other or the head piece (24) that form, in the multiple rotary transmission leadthrough formed with a modular similar construction, an anti-rotation device between neighbouring elements (10) and the head piece, and that in the multiple rotary transmission leadthrough a sealed continuous channel is formed in this way.

2. The multiple rotary transmission leadthrough according to Claim 1, **characterized in that** the first element (12) is provided with pin (38) and a hole (40) serving to receive the pin (38) in a neighbouring unit (10) .

3. The multiple rotary transmission leadthrough according to one of the preceding claims, **characterized in that** the mandrel (36) that serves to line up the units (10) on corresponding to the number of units (10) consists of a number of thread sections screwed together, so that a unit (10) can be exchanged without exchanging the entire multiple rotary transmission leadthrough.

## Revendications

1. Passage tournant multiple pour transférer plusieurs fluides entre un composant logé de manière fixe et un composant logé à rotation, comprenant
- un élément logé de manière fixe et un élément logé à rotation qui sont pourvus chacun d'une pluralité de premiers ou bien de deuxièmes raccords communiquant entre eux,
- une pluralité d'unités séparées (10) à relier entre elles de manière à être bloquées en rotation, en un nombre correspondant aux exigences respectives,
lesdites unités (10) étant composées chacune d'un premier élément annulaire (12) et d'un deuxième élément en forme de disque (18) logé à l'intérieur de l'élément annulaire (12) de manière à pouvoir tourner par rapport à celui-ci,
lesdites unités (10) étant pourvues d'un évidement (34) qui servent à enfiler les unités (10) sur un mandrin (36) mis à une longueur requise selon le nombre des unités (10),
- - ledit premier élément (12) étant pourvu d'un premier raccord (14) partant latéralement ainsi que d'une tige (46) montrant vers l'extérieur, destinée à une fixation anti-rotation sur un composant associé, et
- - ledit deuxième élément (18) étant pourvu d'une pluralité de trous (20) parallèles à l'axe, l'un des trous (20) parallèles l'axe étant fermé sur un côté et étant pourvu d'un trou percé (22),
l'un des éléments (12, 18) étant pourvu d'une conduite annulaire (16) communiquant avec ledit premier raccord (14) et avec ledit trou percé (22), ainsi qu'
une partie de tête (24) ayant une pluralité de trous (26) qui sont alignés avec les trous (20) du deuxième élément (18) et qui communiquent respectivement via des trous percés (28) avec l'un des deuxièmes raccords (30), et
une pluralité de tubes enfichables (32) qui sont enfichés dans lesdits trous (20, 26) d'unités voisines (10) ou bien de la partie de tête (24) et qui forment dans ledit passage multiple réalisé avec une configuration modulaire analogue une anti-rotation entre des éléments voisins (10) et ladite partie de tête et que, ainsi, un canal débouchant étanche est réalisé dans le passage tournant multiple.

2. Passage tournant multiple selon la revendication 1, **caractérisé par le fait que** ledit premier élément (12) est pourvu d'une tige (38) et d'un trou (40) servant à recevoir la tige (38) d'une unité voisine (10).

3. Passage tournant multiple selon l'une quelconque des revendications précédentes, **caractérisé par le fait que** ledit mandrin (36) servant à l'enfilage des unités (10), selon le nombre des unités (10), se compose d'un nombre de tronçons filetés visés entre eux, afin de pouvoir échanger une unité (10) sans échanger l'ensemble du passage tournant multiple.
